**Europäisches Patentamt**

(19) **European Patent Office**

**Office européen des brevets**

(11) Veröffentlichungsnummer: **0 213 441 B1**

# EUROPÄISCHE PATENTSCHRIFT

(45) Veröffentlichungstag der Patentschrift: **10.04.91**

(51) Int. Cl.⁵: **B32B 27/20**, B32B 21/08

(21) Anmeldenummer: **86110854.6**

(22) Anmeldetag: **06.08.86**

(54) **Folie oder Folienbahn für Möbel.**

(30) Priorität: **24.08.85 DE 3530290**

(43) Veröffentlichungstag der Anmeldung:
**11.03.87 Patentblatt 87/11**

(45) Bekanntmachung des Hinweises auf die
Patenterteilung:
**10.04.91 Patentblatt 91/15**

(84) Benannte Vertragsstaaten:
**AT BE CH DE FR GB IT LI LU NL SE**

(56) Entgegenhaltungen:
**EP-A- 0 084 922**
**EP-A- 0 127 149**
**CA-A- 931 486**
**FR-A- 2 521 484**

(73) Patentinhaber: **ALKOR GMBH KUNSTSTOFFE**
**Morgensternstrasse 9 Postfach 71 01 09**
**W-8000 München 71(DE)**

(72) Erfinder: **Schneider, Manfred**
**Steinkirchnerstrasse 35**
**W-8000 München 70(DE)**
Erfinder: **Heitz, Heinrich, Dr.**
**Jägerweg 11**
**W-8034 Germering(DE)**
Erfinder: **Schlenz, Dieter**
**Schanzenstrasse 10**
**W-8195 Neufahrn(DE)**
Erfinder: **Ewald, Egon**
**Trostberger Strasse 12**
**W-8000 München 80(DE)**

(74) Vertreter: **Seiler, Siegfried**
**c/o DEUTSCHE SOLVAY-WERKE GmbH Lang-**
**hansstrasse 6 Postfach 11 02 70**
**W-5650 Solingen 11(DE)**

## Beschreibung

Die vorliegende Erfindung betrifft eine Polyolefinfolie für Möbel mit wengistens einem feinteiligen mineralischen Füllstoff und gegebenenfalls Verarbeitungshilfsmitteln, Farbpigmenten und/oder Modifizierungsmitteln sowie einer Oberflächenschicht.

Aus der EU-A-0 084 922 ist bereits eine Laminatfolie zur Herstellung zusammenfaltbarer oder zusammendrückbarer Behälter (z. B. Zahnpastatuben) bekannt, wobei eine Außenschicht aus füllstoffhaltigem Polypropylen oder eine Mischung von Polypropylen und Polyethylen niedriger Dichte und eine Innenschicht aus einem Polyethylen hoher Dichte sowie vorzugsweise eine sauerstoffundurchlässige Barriereschicht oder Zwischenschicht verwendet werden. Als Füllstoffe werden die üblichen Füllstoffe eingesetzt, die keine Oberflächenbehandlung mit zusätzlichen polare Gruppen enthaltenden Verbindungen aufweisen. Diese Laminatfolien sind zum Verkleben mit Holz oder Holzwerkstoffen nicht oder nur schlecht geeignet und ergeben selbst bei einer vorausgehenden Coronabehandlung keine ausreichende Haftung am Holz oder Holzwerkstoff.

Mit Polyolefinfolien beschichtete Holzwerkstoffe und Verfahren zu deren Herstellung sind bereits aus der DE-OS 33 02 599 bekannt. Bestehen jedoch die in der Folienbahn enthaltenden reaktiven Verbindungen gemäß dieser Patentanmeldung aus organischen Füllstoffen, z. B. Cellulose, feinteiligen Cellulosefasern und dgl., so darf die Verarbeitungstemperatur nicht so hoch gewählt werden, damit eine Schädigung dieser organischen Substanzen (z. B. Auftreten unerwünschter Verfärbungen) vermieden wird. Schließlich ergibt sich, daß die Druckschicht, die auf derartigen Folien als Oberflächenschicht aufgebracht wird, um ein Dekor, eine holzfärbende Tönung und dgl. zu erzielen, eine geringe Abriebfestigkeit aufweist und leicht beschädigbar ist.

Ziel und Aufgabe der vorliegenden Erfindung war es daher, die vorgenannten Nachteile zu vermeiden und eine Folie oder Folienbahn für Möbel auf der Basis eines Polyolefins zu schaffen, die gleiche oder verbesserte Eigenschaften aufweist, die jedoch insbesondere bessere Verarbeitungseigenschaften und somit günstigere Produktionsmöglichkeiten bietet. Die Folie sollte haftfest, bedruckbar sein und die Gefahr der Beschädigung der Druckschicht weitgehend vermieden werden. Die Zusatzstoffe sollten möglichst wenig oder nicht temperaturabhängig bei den üblichen Ver- oder Bearbeitungstemperaturen der Polyolefinfolien sein.

Erfindungsgemäß wurde festgestellt, daß diesen Zielen und Aufgaben eine Polyolefinfolie für Möbel mit wenigstens einem feinteiligen mineralischen Füllstoff und gegebenenfalls Verarbeitungshilfsmitteln, Farbpigmenten und/oder Modifizierungsmitteln sowie einer Oberflächenschicht gerecht wird. Gemäß der Erfindung enthält die Polyolefinfolie oder Polyolefinfolienbahn ein Gemisch oder eine Legierung aus 70 - 97,5 Gew.-Teilen, vorzugsweise 75 - 85 Gew.-Teilen, eines Propylenhomo- oder -copolymerisates, und 5 - 30 Gew.-Teilen, vorzugsweise 15 - 25 Gew.-Teilen, Niederdruckpolyethylen, Polyvinylalkohol, Ethylen-Vinylalkohol-Mischpolymerisat (-Copolymerisat), Ethylen-Acrylsäureester-Acrylsäureterpolymerisat (EAA) oder Polycaprolacton oder Mischungen bzw. Legierungen von Niederdruckpolyethylen mit einem oder mehreren der vorgenannten Polymerisate, Co- oder Terpolymerisate und bezogen auf 100 Gew.-Teile der Kunststoffmischung bzw. -legierung 50 - 150 Gew.-Teile, vorzugsweise 70 - 120 Gew.-Teile, eines feinteiligen mineralischen Füllstoffes oder mineralischen Füllstoffgemisches, vorzugsweise Calciumcarbonat, Mikrotalkum, Kaolin und/ oder Kieselsäuregel, von dem mehr als 60 Gew.-%, vorzugsweise mehr als 75 Gew.-% (bezogen auf 100 Gew.-% eingesetzte bzw. enthaltene Füllstoffe) mindestens eine reaktive Substanz besitzen, wobei als reaktive Substanz mindestens eine polare und unpolare Gruppen aufweisende Substanz in Gewichtsmengen von 0,5 - 10 Gew.-%, vorzugsweise 1 - 5 Gew.-%, (bezogen auf 100 Gew.-Teile Füllstoff oder Füllstoffgemisch) enthalten ist, die vorzugsweise auf der Oberfläche oder auf einem Teil der Oberfläche des Füllstoffes oder Füllstoffgemisches angeordnet ist. Eine Oberflächenschicht oder Oberflächenfolie ist mit einer mittleren Dicke von 3 - 30 $\mu$m, vorzugsweise 5 - 20 $\mu$m, auf bzw. über der Polyolefinfolie oder Polyolefinfolienbahn angeordnet. Die Polyolefinfolie oder Polyolefinfolienbahn weist eine Dicke von 30 - 700 $\mu$m, vorzugsweise 70 - 500 $\mu$m, auf. Die Möbelfolie oder Möbelfolienbahn ist zweischichtig, vorzugsweise mehrschichtig.

Unter Verwendung der Erfindung lassen sich Folien mit einer hohen Oberflächenspannung und einer guten Be druckbarkeit erzielen sowie einer ausreichenden Lagerzeit, innerhalb der die Oberflächenspannung nicht oder nur unwesentlich abnimmt.

Die Oberflächenschicht oder Oberflächenfolie gemäß der Erfindung besteht bevorzugt aus einem transparenten oder nahezu transparenten Kunststoff oder einer transparenten Kunststoffbeschichtung mit einer Dicke von 3 - 30 $\mu$m, vorzugsweise 5 - 20 $\mu$m.

Der mittlere Körnungsdurchmesser des Füllstoffes oder Füllstoffgemisches beträgt 0,05 - 30 $\mu$m, vorzugsweise 0,8 - 10 $\mu$m.

Auf der Unterseite der Polyolefinfolie oder Polyolefinfolienbahn ist gemäß einer bevorzugten Ausführungsform eine Haftschicht oder haftvermittelnde Schicht oder eine oder mehrere Komponenten eines Klebstoffs enthaltende Schicht mit einer mittleren Dicke von 1 - 35 μm, vorzugsweise 2 - 5 μm, angeordnet. Vorzugsweise werden haftvermittelnde Polyurethanharze oder Zusätze von Isocyanaten und/oder Bindemittel, vorzugsweise ein wasserlösliches Bindemittel mit einer Härterkomponente des duromeren Klebstoffes, z.B. eine organische Säure in Kombination mit einem wasserlöslichen Acrylatharz, eingesetzt.

Als Härterkomponente werden die für den jeweiligen duromeren Kunststoff bekannten Härter wie Sulfonsäure (Paratoluolsulfonsäure), Amine und dgl. verwendet.

Die Folie oder Folienbahn gemäß der Erfindung weist auf ihrer Oberfläche eine Oberflächenspannung von mehr als 68 mN/m (milli Newton/Meter bzw. dyn/cm), vorzugsweise von mehr als 71 mN/m (milli Newton/Meter bzw. dyn/cm), auf und/oder ist coronabehandelt oder durch ein Plasmaverfahren vorbehandelt, wobei die vorgenannten Werte der Oberflächenspannung eingestellt werden.

Gemäß einer bevorzugten Ausführungsform sind 0,1 - 20 Gew.-Teile, vorzugsweise 1 - 10 Gew.-Teile, des mit einer polaren Substanz versehenen Füllstoffes oder Füllstoffgemisches durch die gleiche Gewichtsmenge eines polaren Füllstoffes oder polaren Füllstoffgemisches, vorzugsweise ungecoatetes Kaolin und/oder Kieselsäuregel, ersetzt. Dadurch können je nach eingesetztem polaren Füllstoff höhere Oberflächenspannungen erzielt werden.

Die transparente Oberflächenschicht besteht bevorzugt aus einer transparenten oder nahezu transparenten Lackschicht oder Lacküberzugsschicht.

Nach einer vorzugsweisen Ausführungsform ist zwischen der Oberflächenschicht oder Oberflächenfolie und der Polyolefinfolie oder Polyolefinfolienbahn (als Unterfolie) eine Druckschicht angeordnet.

Als polare Substanz bzw. Substanzen ist bzw. sind mindestens eine organisch-chemische Verbindung mit mindestens einer OH-Gruppe und/oder COOH-Gruppe und/oder SiOR oder SiOR-Gruppen oder ähnliche Polysiloxangruppen und mindestens einer oder mehreren unpolaren Gruppen an der Oberfläche des mineralischen Füllstoffes enthalten und/oder dieser ist damit in Form einer dünnen Schicht ganz oder teilweise überzogen, wobei vorzugsweise die polaren Gruppen zum Füllstoff orientiert sind.

Bevorzugt werden als polare und unpolare Gruppen aufweisende Verbindungen gesättigte und ungesättigte Carbonsäuren mit einer C-Zahl über 3, vorzugsweise über 10, Hydroxycarbonsäure, Polyoxycarbonsäuren mit einer C-Zahl über $C_6$, vorzugsweise über $C_{10}$, insbesondere Stearinsäure, Hydroxystearinsäure und Polysiloxane (z.B. Polydimethylsiloxan) oder Hydroxy- oder Amin-Gruppen aufweisende Polysiloxane oder eine oder mehrere Hydroxygruppen enthaltende Polysiloxane eingesetzt.

Wichtig ist, daß die polare und unpolare Gruppen aufweisenden Verbindungen nicht getrennt bei der Folienherstellung zugegeben werden, sondern mit dem Füllstoff oder dem Füllstoffgemisch, wobei sie auf der Oberfläche oder einem Teil der Oberfläche des Füllstoffes angeordnet sein müssen. Setzt man die polaren und unpolaren Gruppen aufweisenden Verbindungen getrennt bei der Folienherstellung zu, ohne daß sie auf der Oberfläche des Füllstoffes angeordnet sind, so besteht die Gefahr des Auftretens von Verarbeitungsschwierigkeiten oder der Herstellung von Folien verschlechteter Qualität.

Die thermoplastische Folie wird kalt oder vorzugsweise heiß mit dem Holz bzw. Holzwerkstoff verklebt. Die Verklebung erfolgt mit Hilfe eines duromeren oder thermoplastischen Klebstoffs. Dabei werden vorzugsweise Formaldehyd-Kondensationsharze auf Basis Harnstoff, Melamin und Phenol verwendet. Diese Kondensationsharze zeigen hervorragende Eigenschaften als Verklebungsmittel, da sie wärmebeständig, hart und hochreaktiv sind.

Es wurde nun gefunden, daß derartige Harze besonders geeignet sind für die Laminierung thermoplastischer Folien auf Holzwerkstoff, da sie die Oberflächenhärte, die Wärmebeständigkeit, die Oberflächenglätte und die Wasserbeständigkeit des entstehenden Verbundes verbessern.

Die duromere Klebstoffschicht wird in einer Dicke von 0,01 bis 0,1 mm, vorzugsweise von 0,03 bis 0,05 mm aufgetragen. Es werden vorzugsweise Klebstoffe verwendet mit einer Kugeldruckhärte nach DIN 53456 von 19613,227 $N/cm^2$ bis 39226,434 $N/cm^2$ (2000 bis 4000 $kp/cm^2$). Die duromere Klebstoffauftragsmenge beträgt 10 bis 150 $g/m^2$, vorzugsweise 30 bis 80 $g/m^2$.

Nach einer Ausführungsform können die polaren Gruppen freie Hydroxy- und/oder N-Methylolgruppen (( = $N\text{-}CH_2\text{-}OH$)-Gruppen) und/oder ( = $N\text{-}CH_2\text{-}OR$)-Gruppen oder COOH-Gruppen oder COOR-Gruppen, wobei R = Alkali- und/oder Erdalkalimetall oder ein Alkylrest ist, sein.

Als Polyolefine werden im Rahmen der Erfindung bevorzugt alle Arten von Olefinhomo-, -Co- oder -Terpolymerisaten, z.B. Polyethylen, einschließlich Polyethylen hoher Dichte (HDPE), Polyethylen niedriger Dichte (LDPE), Polypropylen, Polybuten-1, Mischpolymere und Legierungen von Ethylen und Propylen sowie die Copolymeren von Ethylen oder Propylen, welche eine Wärmebeständigkeit VSP A über 100 °C aufweisen, sowie Gemische dieser Stoffe verwendet. Bei den Copolymeren kommen vor allem solche mit Vinylverbindungen in Betracht. Bei der Verwendung von Polyethylen und Ethylencopolymerisaten werden vorzugsweise solche mit einem Schmelzpunkt von größer als 110 °C, bei Propylenhomo- und -copolymerisaten solche mit einem Schmelzpunkt von größer als 130 °C eingesetzt.

Nach einer anderen Ausführungsform kann die Folie außerdem noch ein oder mehrere organische Modifizierungsmittel enthalten. Diese dienen zur Regelung von Zähigkeit, Kalandrierbarkeit, Extrudierbarkeit und ähnlichen Eigenschaften. Eine bevorzugte Gruppe hierfür sind Blockpolymere von Styrol mit Butadien oder Isobutylen oder Isopren. Andere geeignete Modifizierungsmittel sind Polymerisate auf Basis Styrol-Butadien, Methacrylat-Butadien-Styrol. Polyolefine, die funktionelle Gruppen enthalten, eignen sich besonders zur Beeinflussung des Verhältnisses von physikalischen Eigenschaften zur Verklebbarkeit. Derartige Modifizierungszusätze sind zweckmäßig in einer Menge von 0,5 bis 20 Gew.-Teilen, vorzugsweise von 2 bis 10 Gew.-Teilen, vorhanden.

Als Folien können Monofolien oder Verbund- bzw. Mehrschichtfolien, beispielsweise coextrudierte Folien, eingesetzt werden. Die angegebene maximale Folienstärke wird aus wirtschaftlichen Gründen im Normalfall nicht überschritten, jedoch können auch stärkere Folien zum Einsatz gelangen. Die eingesetzten Folien können bedruckt oder unbedruckt mit einer Holzstruktur als Muster versehen werden oder als durchsichtige bzw. transparente Folien oder als farbige Folien zum Einsatz gelangen.

Wie bereits erwähnt, kommen die Vorteile der erfindungsgemäßen Folie dann besser zur Geltung, wenn sie einer die Oberflächenadhäsion verbessernden Behandlung unterworfen wird. Bevorzugt besteht diese Oberflächen behandlung in Form einer Aktivierung durch Bestrahlung. Unter den Bestrahlungsmethoden wird wiederum eine Corona-Behandlung bevorzugt. Jedoch können auch andere Bestrahlungsmethoden angewendet werden.

Beispiele für andere geeignete Bestrahlungsmethoden sind Elektronenbestrahlung, UV-Bestrahlung und/oder Laserbestrahlung. Auch hier sind geeignete Vorrichtungen bekannt.

Die aktivierende Oberflächenbehandlung kann bei der erfindungsgemäßen Folie zu einer beliebigen Zeit vorgenommen werden.

Als duromerer Klebstoff wird ein aus zwei oder mehreren Komponenten bestehender Klebstoff eingesetzt, der vorzugsweise ein Kondensationsharz auf der Basis eines Amin-, Amino- oder Phenol-Formaldehydharzes ist. Als duromerer Klebstoff auf der Basis eines Formaldehyd-Kondensationsharzes werden vorzugsweise Melamin-Formaldehyd-, Harnstoff-Formaldehyd- oder Phenol-Formaldehydharze verwendet. Mindestens eine Komponente des duromeren Klebstoffes ist nach einer vorzugsweisen Ausführungsform ein wasserlöslicher Härter. Der Härter und die andere(n) zum Kondensationsharz reagierende(n) Komponente(n) werden nach einer bevorzugten Ausführungsform jeweils getrennt auf die Kunststoffolie oder den Holzwerkstoff aufgetragen (so daß sich die Komponenten jeweils getrennt auf den unterschiedlichen Substraten befinden) und nachfolgend die Kunststoffolie mit dem Holzwerkstoff unter Druck vereinigt. Bevorzugt wird dabei der Härter mit einem Bindemittel auf die Folienrückseite als Rückseitenschicht bzw. Rückseitenstrich aufgebracht.

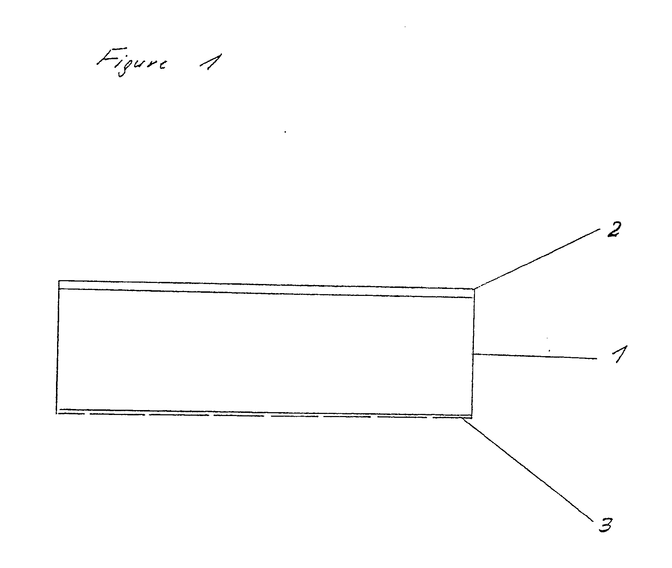

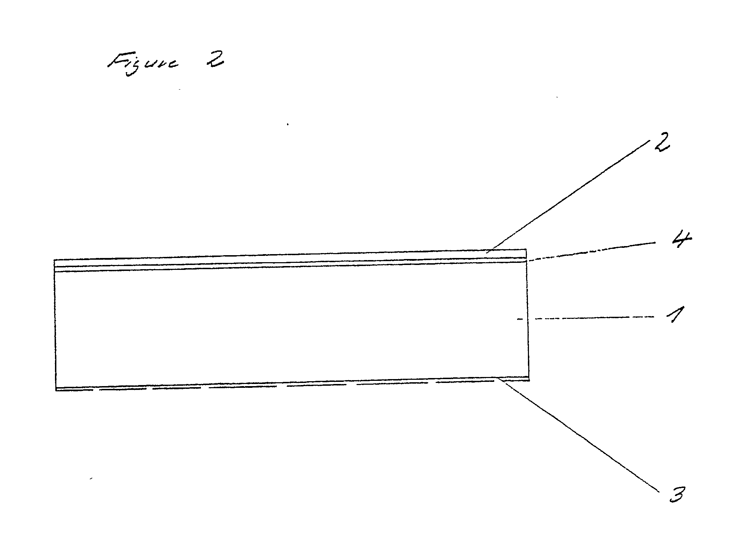

In den beigefügten Abbildungen (Fig. 1 und Fig. 2) sind Ausführungsformen der erfindungsgemäßen Folienbahn für Möbel schematisch dargestellt. In Fig. 1 ist auf der Polyolefinfolienbahn 1 die Oberflächenschicht oder Oberflächenfolie 2 angeordnet, während unterhalb der Folienbahn 1 eine Haftschicht oder haftvermittelnde Schicht 3, vorzugsweise eine Komponente des duromeren Klebstoffs in Kombination mit einem Bindemittel (als Rückseitenstrich oder Rückseitenbeschichtung) angeordnet ist.

In der Figur 2 ist auf der Polyolefinfolienbahn eine Druckschicht 4 partiell oder vollflächig angeordnet, die von der Oberflächenschicht 2 vollflächig abgedeckt ist.

Beispiele für die Polyolefinfolienbahn

Beispiel 1

| 80 | Gew.-Teile | Propylenhomopolymerisat |
|---|---|---|
| 15 | " | " | Niederdruckpolyethylen (HDPE) |
| 5 | " | " | Ethylen-Vinylalkohol-Copolymerisat (EVAL) |
| 99,5 | " | " | Calciumcarbonat, |
| 0,5 | " | " | Hydroxystearinsäure, die auf der Oberfläche von Calciumcarbonat angeordnet ist |
| 0,5 | " | " | Gleitmittel und Stabilisatoren |

Beispiel 2

| 80 | Gew.-Teile | Propylenhomopolymerisat |
|---|---|---|
| 15 | " | " | Niederdruckpolyethylen (HDPE) |
| 5 | " | " | Polyvinylalkohol (PVAL) |
| 99,5 | " | " | Kaolin |
| 0,5 | " | " | Polydimethylsiloxan, das auf der Oberfläche von Kaolin angeordnet ist |
| 0,5 | " | " | Gleitmittel und Stabilisatoren |

EP 0 213 441 B1

Beispiel 3

| 80 | Gew.-Teile | | Propylenhomopolymerisat |
|---|---|---|---|
| 15 | " | " | Niederdruckpolyethylen (HDPE) |
| 5 | " | " | Copolymerisat aus Ethylen und Acryl- |
| | | | säure (EAA) |
| 79,5 | " | " | Calciumcarbonat |
| 15 | " | " | Talkum |
| 0,5 | " | " | Stearinsäure, die auf der Oberfläche |
| | | | des Füllstoffgemisches aus Calcium- |
| | | | carbonat und Talkum angeordnet ist |
| 5 | " | " | Kieselgel |
| 0,5 | " | " | Gleitmittel und Stabilisatoren |

Beispiel 4

| 90 | Gew.-Teile | | Propylenhomopolymerisat |
|---|---|---|---|
| 5 | " | " | Niederdruckpolyethylen (HDPE) |
| 5 | " | " | Ethylen-Vinylalkohol-Copolymerisat |
| | | | (EVAL) |
| 49,5 | " | " | Calciumcarbonat |
| 45 | " | " | Kaolin |
| 0,25 | " | " | Stearinsäure |
| 0,25 | " | " | Polydimethylsiloxan (die auf der |
| | | | Oberfläche des Füllstoffgemisches |
| | | | aus Calciumcarbamat und Kaolin an- |
| | | | geordnet sind) |
| 5 | " | " | Kieselgel |
| 0,5 | " | " | Gleitmittel und Stabilisatoren |

Die Oberflächenschicht bestand aus einem Polyurethanharzlack mit einer mittleren Dicke von 10 $\mu$m.

**Ansprüche**

1. Polyolefinfolie für Möbel mit wenigstens einem feinteiligen mineralischen Füllstoff und gegebenenfalls Verarbeitungshilfsmitteln, Farbpigmenten und/oder Modifizierungsmitteln sowie einer Oberflächenschicht, dadurch gekennzeichnet, daß die Polyolefinfolie ein Gemisch aus
   a) 70 - 97,5 Gewichtsteilen eines Propylenhomo- oder -mischpolymerisats,

6

EP 0 213 441 B1

b) 5 - 30 Gewichtsteilen eines Niederdruckpolyethylens, Polyvinylalkoholes, Ethylen-Vinylalkohol-Mischpolymerisates, Ethylen-Acrylsäure-Mischpolymerisats, Acrylsäureester-Acrylsäure-Terpolymerisats, Polycaprolactons oder einer Mischung davon, und

c) 50 - 150 Gewichtsprozent, bezogen auf das Gemisch aus a) und b), des Füllstoffs enthält, wobei in mehr als 60 Gew.-% des Füllstoffs mindestens eine reaktive Substanz in einer Menge von 0,5 - 10 Gew.-%, bezogen auf 100 Gewichtsteile Füllstoff, enthalten ist.

2. Polyolefinfolie nach Anspruch 1, dadurch gekennzeichnet, daß die reaktive Substanz mindestens eine polare und unpolare Gruppen aufweisende Substanz enthält.

3. Polyolefinfolie nach Anspruch 1 und 2, dadurch gekennzeichnet, daß die Oberflächenschicht aus einem transparenten oder nahezu transparenten Kunststoff oder einer transparenten Kunststoffolie besteht, auf oder über der Polyolefinfolie angeordnet ist, und eine mittlere Dicke von 3 - 30 $\mu$m hat.

4. Polyolefinfolie nach einem oder mehreren der Ansprüche 1 bis 3 dadurch gekennzeichnet, daß der mittlere Körnungsdurchmesser des Füllstoffes oder Füllstoffgemisches 0,05 - 30 $\mu$m beträgt.

5. Polyolefinfolie nach Anspruch 4, dadurch gekennzeichnet, daß der mittlere Körnungsdurchmesser des Füllstoffs 0,8 - 10 $\mu$m beträgt.

6. Polyolefinfolie nach einem oder mehreren der Ansprüche 1 bis 5, dadurch gekennzeichnet, daß auf der der Oberflächenschicht abgewandten Seite der Polyolefinfolie eine Haftschicht mit einer mittleren Dicke von 1 - 35 $\mu$m angeordnet ist.

7. Polyolefinfolie nach Anspruch 6, dadurch gekennzeichnet, daß die mittlere Dicke der Haftschicht 2 - 5 $\mu$m beträgt.

8. Polyolefinfolie nach Anspruch 6 und 7, dadurch gekennzeichnet, daß die Haftschicht eine oder mehrere Komponenten eines Klebstoffs enthält.

9. Polyolefinfolie nach einem oder mehreren der Ansprüche 1 bis 8, dadurch gekennzeichnet, daß sie eine Oberflächenspannung von mehr als 68 mN/m aufweist.

10. Polyolefinfolie nach Anspruch 9, dadurch gekennzeichnet, daß sie eine Oberflächenspannung von mehr als 71 mN/m aufweist.

11. Polyolefinfolie nach einem oder mehreren der Ansprüche 1 bis 10, dadurch gekennzeichnet, daß sie coronabehandelt oder durch ein Plasmaverfahren vorbehandelt ist.

12. Polyolefinfolie nach einem oder mehreren der Ansprüche 1 bis 11, dadurch gekennzeichnet, daß sie ein Gemisch aus

a) 75 - 85     Gewichtsteilen eines Propylenhomo- oder -mischpolymerisats,

b) 15 - 25     Gewichtsteilen Niederdruckpolyethylen, Polyvinylalkohol, Ethylen-Vinylalkohol-Mischpolymerisat, Ethylen-Acrylsäure-Mischpolymerisat, Acrylsäureester-Acrylsäure-Terpolymerisat und/ oder Polycaprolacton und

c) 70 - 120     Gewichtsprozent, bezogen auf das Gemisch aus a) und b), des Füllstoffs enthält, wobei mehr als 60 Gew.-% des Füllstoffs die reaktive Substanz in einer Menge von 0,5 - 10 Gew.-%, bezogen auf 100 Gewichtsteile Füllstoff, wenigstens auf einem Teil der Oberfläche des Füllstoffs enthält, und wobei die Oberflächenschicht eine mittlere Dikke von 3 - 30 $\mu$m hat.

13. Polyolefinfolie nach Anspruch 12, dadurch gekennzeichnet, daß sie als b) eine Mischung aus Niederdruckpolyethylen mit Polyvinylalkohol, Ethylen-Vinylalkohol-Mischpolymerisat, Ethylen-Acrylsäure-Mischpolymerisat, Acrylsäureester-Acrylsäure-Terpolymerisat und/oder Polycaprolacton enthält.

14. Polyolefinfolie nach Anspruch 12 und 13, dadurch gekennzeichnet, daß mehr als 75 Gew.-% des Füllstoffs die reaktive Substanz enthält.

7

15. Polyolefinfolie nach einem oder mehren der Ansprüche 12 bis 14, dadurch gekennzeichent, daß der Füllstoff die reaktive Substanz in einer Menge von 1 - 5 Gew.-%, bezogen auf 100 Gewichtsteile Füllstoff, enthält.

16. Polyolefinfolie nach einem oder mehren der Ansprüche 12 bis 15, dadurch gekennzeichnet, daß die Oberflächenschicht eine mittlere Dicke von 5 - 20 $\mu$m hat.

17. Polyolefinfolie nach einem oder mehreren der Ansprüche 12 bis 16, dadurch gekennzeichnet, daß das Gemisch a) und/oder die Mischung b) als Legierung vorliegt.

18. Polyolefinfolie nach einem oder mehreren der Ansprüche 12 bis 17, dadurch gekennzeichnet, daß sie als Füllstoff Calciumcarbonat, Mikrotalkum, Kaolin und/oder Kieselsäuregel enthält.

19. Polyolefinfolie nach einem oder mehreren der Ansprüche 2 bis 18, dadurch gekennzeichnet, daß 0,1 - 20 Gewichtsteile des mit einer polare und unpolare Gruppen aufweisenden Substanz versehenen Füllstoffs ersetzt sind.

20. Polyolefinfolie nach Anspruch 19, dadurch gekennzeichnet, daß 1 - 10 Gewichtsteile des mit einer polare und unpolare Gruppen aufweisenden Substanz versehenen Füllstoffs durch die gleiche Gewichtsmenge ungecoateten Füllstoffs ersetzt sind.

21. Polyolefinfolie nach Anspruch 20, dadurch gekennzeichnet, daß sie als ungecoateten Füllstoff ungecoatetes Kaolin und/oder ungecoatetes Kieselsäuregel enthält.

22. Polyolefinfolie nach einem oder mehreren der Ansprüche 1 bis 21, dadurch gekennzeichnet, daß sie bahnförmig ist.

23. Polyolefinfolie nach einem oder mehreren der Ansprüche 1 bis 22, dadurch gekennzeichnet, daß die Oberflächenschicht aus einer Folie besteht.

24. Polyolefinfolie nach einem oder mehreren der Ansprüche 1 bis 25, dadurch gekennzeichnet, daß sie aus mehr als zwei Schichten besteht.

25. Polyolefinfolie nach einem oder mehreren der Ansprüche 3 bis 24, dadurch gekennzeichnet, daß die Oberflächenschicht aus einem Lack besteht.

26. Polyolefinfolie nach einem oder mehreren der Ansprüche 1 bis 25, dadurch gekennzeichnet, daß sie zwischen der Oberflächenschicht und der den Füllstoff enthaltenden Schicht eine bedruckbare Schicht enthält.

27. Polyolefinfolie nach einem oder mehreren der ansprüche 2 bis 26, dadurch gekennzeichnet, daß sie als polare und unpolare Gruppen aufweisende Substanz eine Substanz enthält, die mindestens eine COOH- und/oder OH-Gruppe enthält.

28. Verfahren zur Verarbeitung einer Polyolefinfolie, bei dem diese einer energiereichen Strahlung ausgesetzt und dann mit Hilfe eines Klebstoffes oder Klebstoffgemisches mit einer zur Möbelherstellung verwendeten Holz- oder Holzwerkstoffplatte verbunden wird, dadurch gekennzeichnet, daß eine Polyolefinfolie nach einem oder mehreren der Ansprüche 1 bis 27 verwendet wird.

29. Verfahren nach Anspruch 28, dadurch gekennzeichnet, daß als Holzwerkstoffplatte eine Holzspanplatte verwendet wird.

30. Verfahren nach Anspruch 28 und 29, dadurch gekennzeichnet, daß als energiereiche Strahlung eine Coronabehandlung und/oder ein Plasmaverfahren verwendet wird.

31. Verfahren nach einem oder mehreren der Ansprüche 28 bis 30, dadurch gekennzeichnet, daß als Klebstoffgemisch ein Zwei- oder Mehrkomponentenklebstoff verwendet wird.

32. Verfahren nach einem oder mehreren der Ansprüche 28 bis 31, dadurch gekennzeichnet, daß eine Polyolefinfolie nach einem oder mehreren der Ansprüche 1 bis 27 verwendet wird, die mindestens auf einer Oberfläche ein Härtungsmittel oder solche reaktiven Gruppen, die mit einem duromeren Klebstoff reagieren können, enthält, und daß die Polyolefinfolie mit der Holz- oder Holzwerkstoffplatte bei einer Temperatur unter 110 °C unter Durckanwendung verbunden wird.

33. Verfahren nach Anspruch 32, dadurch gekennzeichnet, daß die Polyolefinfolie mit der Holz- oder Holzwerkstoffplatte bei einer Temperatur unter 80 °C verbunden wird.

34. Verfahren nach Anspruch 32 und 33, dadurch gekennzeichnet, daß als duromerer Klebstoff ein Kondensationsharz auf der Basis eines Amin-, Amino- oder Formaldehyd-Harzes verwendet wird.

35. Verfahren nach Anspruch 34, dadurch gekennzeichnet, daß als Formaldehyd-Harz ein Phenol-, Melamin- oder Harnstoff-Formaldehyd-Harz verwendet wird.

36. Verfahren nach einem oder mehreren der Ansprüche 32 bis 35, dadurch gekennzeichnet, daß ein duromerer Klebstoff verwendet wird, der mindestens ein wasserlösliches Härtungsmittel enthält, daß das Härtungsmittel und die andere(n) zum Kondensationsharz reagierende(n) Komponente(n) jeweils getrennt auf die Polyolefinfolie oder auf die Holz- oder Holzwerkstoffplatte aufgetragen werden und daß nachfolgend die Polyolefinfolie mit der Holz- oder Holzwerkstoffplatte unter Druckanwendung verbunden wird.

37. Verfahren nach einem oder mehreren der Ansprüche 28 bis 36, dadurch gekennzeichnet, daß die Polyolefinfolie vor der Verarbeitung bedruckt und/oder genarbt wird.

## Claims

1. Polyolefin film for furniture, comprising at least one finely-divided mineral filler and optionally processing aids, colour pigments and/or modifiers, and also a surface layer, characterised in that the polyolefin film contains a mixture of
   a) 70 - 97.5 parts by weight of a propylene homopolymer or mixed polymer,
   b) 5 - 30 parts by weight of a high density polyethylene, polyvinyl alcohol, ethylene/vinyl alcohol mixed polymer, ethylene/acrylic acid mixed polymer, acrylic acid ester/acrylic acid terpolymer, polycaprolactone or a mixture thereof, and
   c) 50 - 150 percent by weight, relative to the mixture of a) and b), of the filler, with at least one reactive substance being contained in more than 60% by weight of the filler in a quantity of 0.5 - 10% by weight, relative to 100 parts by weight filler.

2. Polyolefin film according to Claim 1, characterised in that the reactive substance contains at least one substance containing polar and non-polar groups.

3. Polyolefin film according to Claim 1 and 2, characterised in that the surface layer consists of a transparent or almost transparent plastic or a transparent plastic film, is arranged on or over the polyolefin film and has an average thickness of 3 - 30 $\mu$m.

4. Polyolefin film according to one or more of Claims 1 to 3, characterised in that the average grain diameter of the filler or filler mixture is 0.05 - 30 $\mu$m.

5. Polyolefin film according to Claim 4, characterised in that the average grain diameter of the filler is 0.8 - 10 $\mu$m.

6. Polyolefin film according to one or more of Claims 1 to 5, characterised in that a bonding layer with an average thickness of 1 - 35 $\mu$m is disposed on the side of the polyolefin film remote from the surface layer.

7. Polyolefin film according to Claim 6, characterised in that the average thickness of the bonding layer is 2 - 5 $\mu$m.

8. Polyolefin film according to Claims 6 and 7, characterised in that the bonding layer contains one or more constituents of an adhesive.

9. Polyolefin film according to one or more of Claims 1 to 8, characterised in that it has a surface tension of more than 68 mN/m.

10. Polyolefin film according to Claim 9, characterised in that it has a surface tension of more than 71 mN/m.

11. Polyolefin film according to one or more of Claims 1 to 10, characterised in that it is subjected to corona treatment or is pre-treated by a plasma process.

12. Polyolefin film according to one or more of Claims 1 to 11, characterised in that it contains a mixture of
   a) 75 - 85     parts by weight of a propylene homopolymer or mixed polymer,
   b) 15 - 25     parts by weight high density polyethylene, polyvinyl alcohol, ethylene/vinyl alcohol mixed polymer, ethylene/acrylic acid mixed polymer, acrylic acid ester/acrylic acid terpolymer and/or polycaprolactone and
   c) 70 - 120    percent by weight, relative to the mixture of a) and b), of the filler, with more than 60% by weight of the filler containing the reactive substance in a quantity of 0.5 - 10% by weight, relative to 100 parts by weight filler, at least on part of the surface of the filler, and with the surface layer having an average thickness of 3 -30 $\mu$m.

13. Polyolefin film according to Claim 12, characterised in that it contains a mixture of high density polyethylene with polyvinyl alcohol, ethylene/vinyl alcohol mixed polymer, ethylene/acrylic acid mixed polymer, acrylic acid ester/acrylic acid terpolymer and/or polycaprolactone as b).

14. Polyolefin film according to Claim 12 and 13, characterised in that more than 75% by weight of the filler contains the reactive substanoe.

15. Polyolefin film according to one or more of Claims 12 to 14, characterised in that the filler contains the reactive substance in a quantity of 1 - 5% by weight, relative to 100 parts by weight filler.

16. Polyolefin film according to one or more of Claims 12 to 15, characterised in that the surface layer has an average thickness of 5 - 20 $\mu$m.

17. Polyolefin film according to one or more of Claims 12 to 16, characterised in that the mixture a) and/or the mixture b) is present as an alloy.

18. Polyolefin film according to one or more of Claims 12 to 17, characterised in that it contains calcium carbonate, micro-talcum, kaolin and/or silica gel as filler.

19. Polyolefin film according to one or more of Claims 2 to 18, characterised in that 0.1 - 20 parts by weight of the filler provided with a substance having polar and non-polar groups are replaced.

20. Polyolefin film according to Claim 19, characterised in that 1 - 10 parts by weight of the filler provided with a substance having a polar and non-polar groups are replaced by the same amount by weight of non-coated filler.

21. Polyolefin film according to Claim 20, characterised in that it contains non-coated kaolin and/or non-coated silica gel as the non-coated filler.

22. Polyolefin film according to one or more of Claims 1 to 21, characterised in that it is in web form.

23. Polyolefin film according to one or more of Claims 1 to 22, characterised in that the surface layer consists of a film.

24. Polyolefin film according to one or more of Claims 1 to 25, characterised in that it consists of more than two layers.

25. Polyolefin film according to one or more of Claims 3 to 24, characterised in that the surface layer consists of a lacquer.

26. Polyolefin film according to one or more of Claims 1 to 25, characterised in that it contains a printable layer between the surface layer and the layer containing the filler.

27. Polyolefin film according to one or more of Claims 2 to 26, characterised in that it contains a substance which contains at least one COOH group and/or OH group as the substance having polar and non-polar groups.

28. Method for processing a polyolefin film, in which said film is exposed to energy-rich radiation and then is joined to a panel of wood or timber material used for making furniture with the aid of an adhesive or adhesive mixture, characterised in that a polyolefin film according to one or more of Claims 1 to 27 is used.

29. Method according to Claim 28, characterised in that a wood-chip board is used as the panel of timber material.

30. Method according to Claims 28 and 29, characterised in that corona treatment and/or a plasma process is used as energy-rich radiation.

31. Method according to one or more of Claims 28 to 30, characterised in that a two-constituent or multi-constituent adhesive is used as the adhesive mixture.

32. Method according to one or more of Claims 28 to 31, characterised in that a polyolefin film according to one or more of Claims 1 to 27 is used which contains a hardening agent or reactive groups which can react with a duromeric adhesive at least on one surface, and that the polyolefin film is joined to the panel of wood or timber material at a temperature below 110° C with the application of pressure.

33. Method according to Claim 32, characterised in that the polyolefin film is joined to the panel of wood or timber material at a temperature below 80° C.

34. Method according to Claims 32 and 33, characterised in that a condensation resin on the basis of an amine resin, amino resin or formaldehyde resin is used as the duromeric adhesive.

35. Method according to Claim 34, characterised in that a phenol/formaldehyde resin, melamine/formaldehyde resin or urea/formaldehyde resin is used as the formaldehyde resin.

36. Method according to one or more of Claims 32 to 35, characterised in that a duromeric adhesive is used which contains at least one water-soluble hardening agent, that the hardening agent and the other constituent(s) reacting to produce the condensation resin are each applied separately to the polyolefin film or to the panel of wood or timber material and that the polyolefin film is then joined to the panel of wood or timber material with the application of pressure.

37. Method according to one or more of Claims 28 to 36, characterised in that the polyolefin film is printed and/or grained before processing.

## Revendications

1. Feuille de polyoléfine pour meubles comprenant au moins une matière de charge minérale en fines particules et éventuellement des adjuvants de traitement, des pigments colorés et/ou des agents modifiants ainsi qu'une couche superficielle caractérisée en ce qu'elle contient un mélange de
   a) 70-97,5 parties en poids d'un homopolymère ou d'un copolymère de propylène,
   b) 5-30 parties en poids d'un polyéthylène basse pression, d'un alcool polyvinylique, d'un copolymère d'éthylène et d'alcool vinylique, d'un copolymère d'éthylène et d'acide acrylique, d'un terpolymère d'éthylène, d'ester d'acide acrylique et d'acide acrylique, de polycaprolactone ou d'un mélange de ceux-ci, et

c) 50-150 parties en poids, par rapport au mélange de a) et b), de la matière de charge dont plus de 60 % en poids contiennent au moins une substance réactive en une quantité de 0,5-10% en poids, par rapport à 100 parties en poids de matière de charge.

2. Feuille de polyoléfine suivant la revendication 1 caractérisée en ce que la substance réactive contient au moins une substance présentant des groupes polaires et non polaires.

3. Feuille de polyoléfine suivant l'une des revendications 1 et 2 caractérisée en ce que la couche superficielle consiste en une résine synthétique transparente ou presque transparente ou en une feuille de résine synthétique transparente, en ce qu'elle est disposée sur la feuille de polyoléfine et en ce qu'elle a une épaisseur moyenne de 3-30 μm.

4. Feuille de polyoléfine suivant une ou plusieurs des revendications 1 à 3 caractérisée en ce que le diamètre moyen des particules de la matière de charge ou du mélange de matières de charge est de 0,05 à 30 μm.

5. Feuille de polyoléfine suivant la revendication 4 caractérisée en ce que le diamètre moyen des particules de la matière de charge est de 0,8-10 μm.

6. Feuille de polyoléfine suivant une ou plusieurs des revendications 1 à 5 caractérisée en ce qu'une couche d'adhérence ayant une épaisseur moyenne de 1-35 μm est disposée sur le côté de la feuille de polyoléfine opposé à la couche superficielle.

7. Feuille de polyoléfine suivant la revendication 6 caractérisée en ce que l'épaisseur moyenne de la couche d'adhérence est de 2-5 μm.

8. Feuille de polyoléfine suivant l'une des revendications 6 et 7 caractérisée en ce que la couche d'adhérence contient une ou plusieurs composante(s) d'une colle.

9. Feuille de polyoléfine suivant une ou plusieurs des revendications 1 à 8 caractérisée en ce qu'elle présente une tension superficielle de plus de 68 mN/m.

10. Feuille de polyoléfine suivant la revendication 9 caractérisée en ce qu'elle présente une tension superficielle de plus de 71 mN/m.

11. Feuille de polyoléfine suivant une ou plusieurs des revendications 1 à 10 caractérisée en ce qu'elle est traitée au corona ou prétraitée par un procédé au plasma.

12. Feuille de polyoléfine suivant une ou plusieurs des revendications 1 à 11 caractérisée en ce qu'elle contient un mélange de
a) 75-25 parties en poids d'un homopolymère ou d'un copolymère de propylène,
b) 15-25 parties en poids d'un polyéthylène basse pression, d'alcool polyvinylique, d'un copolymère d'éthylène et d'alcool vinylique, d'un copolymère d'éthylène et d'acide acrylique, d'un terpolymère d'éthylène, d'ester d'acide acrylique et d'acide acrylique et/ou de polycaprolactone et
c) 70-120 parties en poids, par rapport au mélange de a) et b), de la matière de charge dont plus de 60 % en poids contiennent au moins une substance réactive en une quantité de 0,5-10% en poids, par rapport à 100 parties en poids de matière de charge, au moins sur une partie de la surface de la matière de charge,
et en ce que la couche superficielle a une épaisseur moyenne de 3-30 μm.

13. Feuille de polyoléfine suivant la revendication 12 caractérisée en ce qu'elle contient comme élément b) un mélange de polyéthylène basse pression avec de l'alcool polyvinylique, un copolymère d'éthylène et d'alcool vinylique, un copolymère d'éthylène et d'acide acrylique, un terpolymère d'éthylène, d'ester d'acide acrylique et d'acide acrylique et/ou de polycaprolactone.

14. Feuille de polyoléfine suivant l'une des revendications 12 et 13 caractérisée en ce que plus de 75% en poids de la matière de charge contiennent la substance réactive.

**15.** Feuille de polyoléfine suivant une ou plusieurs des revendications 12 à 14 caractérisée en ce que la matière de charge contient la substance réactive en une quantité de 1-5% en poids par rapport à 100 parties en poids de matière de charge.

**16.** Feuille de polyoléfine suivant une ou plusieurs des revendications 12 à 15 caractérisée en ce que la couche superficielle a une épaisseur moyenne de 5-20 $\mu$m.

**17.** Feuille de polyoléfine suivant une ou plusieurs des revendications 12 à l6 caractérisée en ce que le mélange a) et/ou le mélange b) sont présents à l'état d'alliage.

**18.** Feuille de polyoléfine suivant une ou plusieurs des revendications 12 à 17 caractérisée en ce qu'elle contient comme matière de charge du carbonate de calcium, du microtalc, du kaolin et/ou du gel de silice.

**19.** Feuille de polyoléfine suivant une ou plusieurs des revendications 2 à 18 caractérisée en ce que 0,1 à 20 parties en poids de la matière de charge pourvue d'une substance présentant des groupes polaires et non polaires sont remplacées.

**20.** Feuille de polyoléfine suivant la revendication 19 caractérisée en ce que 1 à 10 parties en poids de la matière de charge pourvue d'une substance présentant des groupes polaires et non polaires sont remplacées par la même quantité en poids de matière de charge non revêtue.

**21.** Feuille de polyoléfine suivant la revendication 20 caractérisée en ce qu'elle contient comme matière de charge non revêtue du kaolin non revêtu et/ou du gel de silice non revêtu.

**22.** Feuille de polyoléfine suivant une ou plusieurs des revendications 1 à 21 caractérisée en ce qu'elle se présente sous la forme d'une feuille continue.

**23.** Feuille de polyoléfine suivant une ou plusieurs des revendications 1 à 22 caractérisée en ce que la couche superficielle consiste en une feuille.

**24.** Feuille de polyoléfine suivant une ou plusieurs des revendications 1 à 23 caractérisée en ce qu'elle se compose de plus de deux couches.

**25.** Feuille de polyoléfine suivant une ou plusieurs des revendications 1 à 24 caractérisée en ce que la couche superficielle consiste en une laque.

**26.** Feuille de polyoléfine suivant une ou plusieurs des revendications 1 à 25 caractérisée en ce qu'elle comprend une couche imprimable entre la couche superficielle et la couche qui contient la matière de charge.

**27.** Feuille de polyoléfine suivant une ou plusieurs des revendications 1 à 26 caractérisée en ce qu'elle contient, comme substances présentant des groupes polaires et non polaires, une substance contenant au moins un groupe -COOH et/ou un groupe -OH.

**28.** Procédé de façonnage d'une feuille de polyoléfine dans lequel celle-ci est soumise à une irradiation de haute énergie et est ensuite associée à une plaque de bois ou de matériau à base de bois utilisée pour la fabrication de meubles à l'aide d'une colle ou d'un mélange de colles, caractérisé en ce qu'on utilise une feuille de polyoléfine mentionnée dans une ou plusieurs des revendications 1 à 27.

**29.** Procédé suivant la revendication 28 caractérisé en ce qu'on utilise un panneau de copeaux de bois comme plaque de matériau à base de bois.

**30.** Procédé suivant l'une des revendications 28 et 29 caractérisé en ce qu'on utilise pour l'irradiation de haute énergie un traitement au corona et/ou un procédé au plasma.

**31.** Procédé suivant une ou plusieurs des revendications 28 à 30 caractérisé en ce qu'on utilise comme mélange de colles une colle à deux ou à plusieurs composantes.

32. Procédé suivant une ou plusieurs des revendications 28 à 31 caractérisé en ce qu'on emploie une feuille de polyoléfine suivant une ou plusieurs des revendications 1 à 27 qui contient sur au moins une surface un agent de durcissement ou des groupes réactifs qui peuvent réagir avec une colle duromère et en ce que la feuille de polyoléfine est associée à la plaque de bois ou la plaque de matériau à base de bois à une température inférieure à 110 °C avec application de pression.

33. Procédé suivant la revendication 32 caractérisé en ce que la feuille de polyoléfine est associée à la plaque de bois ou de matériau à base de bois à une température inférieure à 80 °C.

34. Procédé suivant l'une des revendications 32 et 33 caractérisé en ce qu'on emploie comme colle duromère une résine de condensation à base d'une résine amine-, amino- ou formaldéhyde.

35. Procédé suivant la revendication 34 caractérisé en ce qu'on emploie comme résine formaldéhyde une résine phénol-, mélamine- ou urée-formaldéhyde.

36. Procédé suivant une ou plusieurs des revendications 32 à 35 caractérisé en ce qu'on emploie une colle duromère qui contient au moins un agent de durcissement soluble dans l'eau, en ce qu'on applique séparément sur la feuille de polyoléfine ou sur la plaque de bois ou de matériau à base de bois d'une part l'agent de durcissement et d'autre part la ou les autres composantes qui réagissent pour former la résine de condensation et en ce qu'on associe ensuite la feuille de polyoléfine à la plaque de bois ou de matériau à base de bois sous application de pression.

37. Procédé suivant une ou plusieurs des revendications 28 à 36 caractérisé en ce que la feuille de polyoléfine est imprimée et/ou grainée avant le façonnage.

14

Figure 1

Figure 2